# EUROPEAN PATENT APPLICATION

(11) **EP 2 915 465 A1**
(43) Date of publication of application: **09.09.2015**
(21) Application number: 14158141.3
(22) Date of filing: 06.03.2014
(51) Int. Cl.: A47J 31/36

(54) **Beverage production device for receiving a capsule for the preparation of a beverage**

(71) Applicant: Nestec S.A., 1800 Vevey (CH)
(72) Inventor: Gunstone, Andrew, 1040 Echallens (CH); Perentes, Alexandre, 1012 Lausanne (CH); Ryser, Antoine, 1006 Lausanne (CH)
(74) Representative: Borne, Patrice Daniel

(57) **Abstract**

Beverage production device (1) for receiving a capsule (5) for the preparation of a beverage comprising:
- a first enclosing part (2) comprising a cavity (15),
- a second enclosing part (3); the first and second enclosing parts (2, 3) being moveable relative to one another between an open position and a closed position;
- a sliding ramp (32) being positioned in a preset guiding position in the open position of the enclosing parts (2, 3) for guiding the capsule in an intermediate position;
- capsule holding means to support the capsule in the intermediate position against gravity;

wherein the capsule holding means comprises a capsule support member (34) which comprises a receiving surface for preventing the capsule from falling under gravity which is positioned at distance from the cavity (15) of the first enclosing part (2).

## Description

### Field of the invention:

The present invention relates to a beverage production device for the preparation of a beverage from beverage ingredients, such as coffee, tea and the like, contained in a capsule. The invention is more specifically related to the manner the capsule is inserted in the device and ejected from the device.

### Background:

Beverage production devices using capsules for the preparation of a beverage are known. An important aspect is to provide a device which is convenient and reliable for insertion in its brewing unit, closure of the brewing unit around the capsule and ejection of the capsule from the brewing unit.

Various systems have been conceived for handing a capsule inserted vertically in a passage between two brewing parts which are closed on the capsule. These systems generally offer convenience for the user.

For instance, EP1859714A1 relates to a brewing device with a fixed holding member having a chamber for holding the capsule against gravity and a non-supporting area which is placed adjacent the holding chamber for removal of the capsule. This system is more particularly adapted for thin pods or lenticular capsules.

US5755149 relates to an automatic machine for the preparation of hot beverage infusion. The capsule is retained for insertion by a moveable abutment whose movement takes place in rotation. The abutment also serves as ejection means. The abutment is also returned in place by means of a control cam.

EP1219217A1 relates to a coffee machine comprising a fixed vertical drop-down conduit and a substantially cylindrical body oscillating for receiving and ejecting the dispenser pod.

EP2265156B1 relates to a beverage appliance comprising an inclined insertion channel and a capsule holder which is also inclined relative to the horizontal. A relatively complicated system is required for removing the capsule from the capsule holder such as a pair of articulated arms.

EP2250950B1 relates to a machine for the preparation of brewed beverages comprising an inclined fixed guide for insertion of the capsule, a piston actuated by a lever, a pivoting chamber arranged to receive the capsule; the chamber being moved from a first position to a second position by means of the lever.

EP2405790B1 relates to a machine suitable for receiving cartridges for the preparation of beverages comprising an infusion assembly, a slide for introducing a single cartridge; a lever for operating a piston; said piston being able to move rectilinearly in a direction and having a first resting position and a second working position ; a chamber suitable to receive the cartridge; the slide being positioned in an intermediate position between said first resting position and said second working position; said slide having a pre-set resting position so that the cartridge is positioned resting on an edge of the chamber.

The prior art devices do not provide a solution for handling (i.e., insertion/ejection) capsules of different depths and/or facilitating the proper handling of relatively bulky capsules, in particular, capsules having a relatively extensive depth.

In particular, there is a need for accommodating capsules having different depths in a same device. Therefore, a beverage device can be able to manage properly the insertion and ejection of capsules of different sizes including the larger ones. The capsule must so be inserted reliably irrespective of its size, e.g., its depth. The capsule must be well centered in the brewing unit. This may be important to ensure a proper beverage extraction.

There must also be as low risk of blocking or damage to the capsule as possible.

For example, certain capsules such as metal-based capsules are prone to deformation upon shocks or to squeezing by moving parts of the device when the capsule takes a wrong position in the device before closure. As a result, the closure of the system may be impossible to complete properly or may lead to a wrong position of the capsule in the closed device or may lead to an impossible ejection.

Also, the integrity of the capsule can be important to respect for enabling the proper recognition of the capsule. For example, an identification means such as a barcode can be located on a sensitive part of the capsule (e.g., on the rim, sidewall,...) and its integrity should be protected. An accidental deformation of the part may render the identification unreliable or impossible and the capsule may have to be discarded. Therefore, there is a need for proposing a beverage preparation device solving the above-mentioning problems. In particular, there is a need for a simple device enabling the handling of the capsule in the device while, in particular, reducing the risk of blocking and damages to the capsules, and properly accommodating capsules of different depths.

### Summary of the invention:

According to the present invention, these objects and others are achieved with a beverage production device for receiving a capsule for the preparation of a beverage comprising:
- a first enclosing part comprising a cavity,
- a second enclosing part; the first and second enclosing parts being moveable relative to one another between an open position and a closed position;
- a sliding ramp being positioned in a preset guiding position in the open position of the enclosing parts for guiding the capsule in an intermediate position;
- capsule holding means to support the capsule in the intermediate position against gravity;
wherein the holding means comprises a capsule support member which comprises a receiving surface for preventing the capsule from falling under gravity which is positioned at distance from the cavity of the first enclosing part.

More particularly, these object and other are achieved with a beverage production device according to claim 1.

Therefore, it was surprisingly found that the capsule can be precisely moved and positioned during insertion while reducing the risk of blocking and damages to the capsule and/or device.

In particular, the capsule is well guided during insertion in the passage and is moved to the cavity precisely and smoothly. Also, the depth of the capsule is less of a problem (e.g., the bottom being less prone to being blocked in the device) because enough distance can be maintained between the enclosing part and the capsule by means of the capsule support. Also, the pivotal way the capsule is inserted in the cavity reduces the risk of shocks and deformation.

It is also found that capsules of different depths can be handled in the device while precise positioning of the capsule is assured in the closed device.

A capsule being dedicated for the device may comprise a cup-shaped body, preferably with a bottom and a sidewall, an outwardly oriented rim or flange; and a lid sealed onto the rim or flange. The lid may be relatively flat, slightly concave or convex. The body may take various shapes and depths. The body is preferably rotationally symmetrical. It may be formed as a fully convex part or be a trunk of cone or be cylindrical. The largest distance between the opening (mouth) of body and its bottom (i.e., its depth) can vary depending on needs and/or the type of beverages (e.g., capsule for a long cup of coffee, espresso, ristretto, tea, etc.).

The device may operate by having the second enclosing part being moveable along a direction of movement A towards the first enclosing part remaining static. In this case, the device comprises a casing to support the first enclosing part such as by fixed connection means and guiding means such as guiding openings (e.g., slots, rails, sliders,...) for guiding the second part in movement.

Alternatively, the device may comprise a second enclosing part which is fixed and a first enclosing part which is moveable along the direction of movement A. In such case, the frame supports the second enclosing part such as by fixed connection means and it guides the first enclosing part by guiding means such as guiding openings.

It should be noted that the direction of movement A is preferably linear. However, a combination of movements other than linear can also be envisaged.

In an aspect, the sliding ramp is mounted relative to the first enclosing part or an outer casing to move the capsule towards the cavity as a result of the second enclosing part moving relative to the first enclosing part.

In an aspect, the receiving surface of the capsule support member is arranged to form a pivot point or line, at least when the capsule starts moving towards the cavity. As a result, the insertion of the capsule in the cavity is more precise. There is less risk of misalignment of the capsule in the cavity.

In another aspect, the sliding ramp is mounted, preferably pivotally, relative to the first enclosing part or an outer casing to be moved away from the passage in a retracted position as a result of the second enclosing part moving relative to the first enclosing part in closed position. In other words, the sliding ramp is retractable to free the passage and allow the device to close unhindered. Since the sliding ramp can be fully retracted, this enables to provide a sliding ramp with sufficient guiding surface both transversally and vertically. The capsule can be well positioned in intermediate position with reduced risk of misalignment.

The pivoting sliding ramp also provides a relatively careful way of managing the insertion of the capsule in the cavity for compensating for the longest distance between the capsule and the cavity. Therefore, the capsule essentially endures substantially no high stress during this insertion in the cavity which so limit the risk of deformation.

The sliding ramp is preferably arranged for receiving and guiding the capsule by its lid just placed on a relatively flat sliding surface of the sliding ramp, and the body of the capsule being turned towards the cavity.

In an aspect, the sliding ramp comprises at least two portions of receiving surfaces which are spaced apart transversally. For instance, the sliding ramp comprises two side arms. The side arms can have an "L-shaped" section. They can be linked by at least one transversal arm. For example, the sliding ramp can have the general form of an inverted U or be quadrilateral.

In an aspect, the sliding ramp is arranged to be pushed by the second enclosing part from its the preset guiding to its retracted position. Such configuration is simple and does not necessitate actuation means for moving the sliding ramp. Also, it ensures the coordination of the retraction of the ramp and the closure of the enclosing parts.

In particular, the sliding ramp can be articulated in swiveling manner about at least one axis I which is substantially orthogonal to the main direction A of movement of the second enclosing part relative to the first enclosing part.

In another aspect, the capsule receiving surface is formed in a transversal upwardly-oriented gutter to support the capsule, preferably, the rim or flange of the capsule. The gutter preferably extends transversally, i.e., orthogonally relative to the direction of relative movement of the enclosing parts. It is indeed preferred to support the rim of the capsule according to such an arrangement to limit the risk of deformation of the rim and other regions of the capsule.

In another aspect, the capsule receiving surface is arranged substantially with at least one portion aligned with the guiding surface of the sliding ramp. This configuration participates to the constant positioning referential of the capsule (e.g., irrespective of its depth). In particular, capsules with different forms or depths of body can be maintained positioned identically aligned along their rim or flange.

In an aspect, the capsule support member is mounted, preferably pivotally, on the bottom of the first enclosing part in moveable manner between a capsule support position corresponding to the intermediate position of the capsule and a retracted position in which the capsule in the passage can fall by gravity for its ejection from the passage. The advantage is to ensure a clearance of the passage during closure of the enclosing parts and a reliable unhindered ejection of the capsule. A pivotal mounting of the capsule support member further provides the advantage of facilitating the retraction of the member and providing lower risk of blocking.

In particular, the capsule support member may be pivotally mounted on the first part, preferably at its bottom, about an axis Y which is substantially orthogonal to the main direction A of movement of the second part relative to the first part.

In particular, in the capsule support position, the receiving surface is present in the passage whereas it is moved away from the passage in the retracted position to enable the two parts to be assembled about the capsule in the closing position. As a result, the capsule, in particular, its lower portion, is placed at the proper horizontal level relative to the cavity.

In another aspect, a first cam means is provided to move the capsule support member from the retracted position to the capsule support position. The capsule support can so be actuated from one position to the other and vice-versa by a reciprocating movement of the cam driving means. Such arrangement is relatively simple, reliable and it enables to reduce the number of parts necessary for actuating the capsule support.

Preferably, a, preferably magnetic, clutch arrangement is provided to maintain the capsule support member in the retracted position while being disengaged by the first cam means. The cam means is a reliable, easy system for actuating the support member. The clutch arrangement enables to delay the return of the capsule support member in support position so that ejection of the capsule from the passage is allowed when the device is re-opened.

In a mode, the first cam means is provided between the capsule support member and a rotary cam driving means; the first cam means been engaged to move the capsule support member to the capsule support position when the cam drive means is rotated to a first direction. A second cam means may be provided between the capsule support member and the rotary cam driving means; the second cam means been arranged relative to the first cam means to become engaged when the cam driving means is rotated in opposed direction relative to first direction. More particularly, the first and second cam means may comprise respective abutting pins angularly distant on the rotary cam driving means, which each engages a respective side of at least one lever of the capsule support member.

The rotary cam driving means may for instance be at least one rotary geared driving wheel, preferably a pair of rotary geared driving wheels. The rotary cam driving means may be driven by a motor arrangement or a manual actuation means such as a lever or handle.

Advantageously, the rotary cam driving means may further comprises means for driving the second enclosing part between the open and closed positions, by a reciprocal rotational movement of the rotary driving means. Therefore, a coordination exists between the relative movement of the enclosing parts and the position of the capsule support member; such coordination being obtained reliably by a reduced number of pieces.

In another aspect, ejecting means are provided to facilitate the removal of the capsule from the cavity and/or from the engaging surface of the second part.

The second enclosing part may comprise a brewing interface member with elastic pushing means, preferably at least one spring-blade, which acts on the capsule, preferably its lid, to unstick it from the said member. For instance, the capsule ejecting means can be formed by at least one pusher, preferably, spring-biased in the cavity, which engages the capsule, preferably its body, in a pushing action directed towards the passage of the device.

The first enclosing part may also comprise capsule ejecting means which engage the capsule, preferably its body, to facilitate its removal from the cavity.

In a non-limiting aspect, the first enclosing part and second enclosing part form together at least part of a centrifugal brewing unit in which the capsule is driven in rotation for exerting forces of centrifugation inside the capsule resulting in beverage extraction from the capsule. In particular, the second enclosing part may comprise a rotary brewing interface member comprising perforating elements for supplying liquid in the capsule and/or draining beverage from the capsule.

### Brief description of the figures:

Figure 1 shows a perspective view of the beverage production device of the present invention according to a first mode, with the outer casing removed;
Figure 2 shows a cross-sectional view along the median longitudinal plane P of the device of figure 1 in the open position of the device for insertion of a capsule inside, with the outer casing present;
Figure 3 shows a partial side view of the device in the open position of the device of

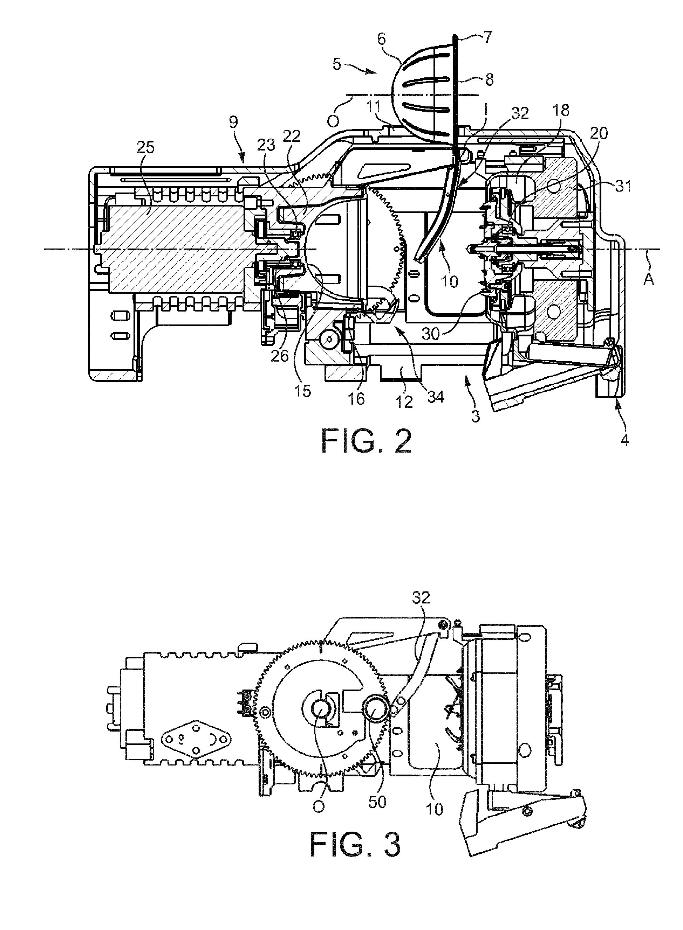

Figure 2, with the guiding frame of the second enclosing part removed for clarity;

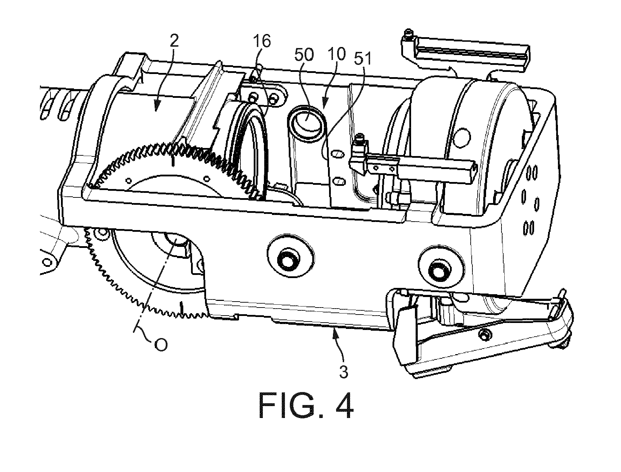

Figure 4 shows a perspective and partial view of the device, in the open position, with the outer casing and one rotary driving (geared) wheel removed;

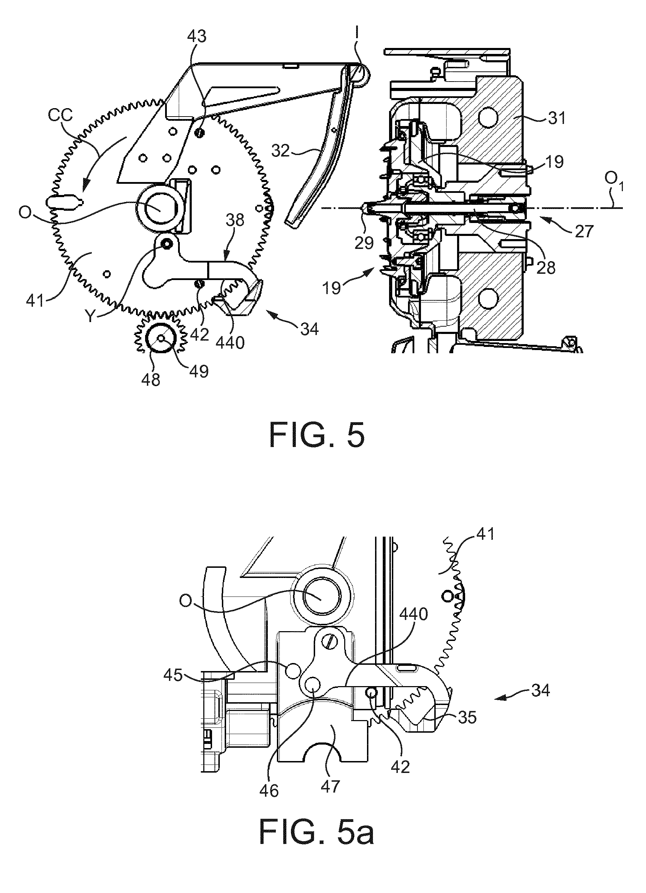

Figure 5 shows a partial side view of the device in the open position of the device of
Figure 2, with the first enclosing part removed;
Figure 5a shows a detail of figure 5;

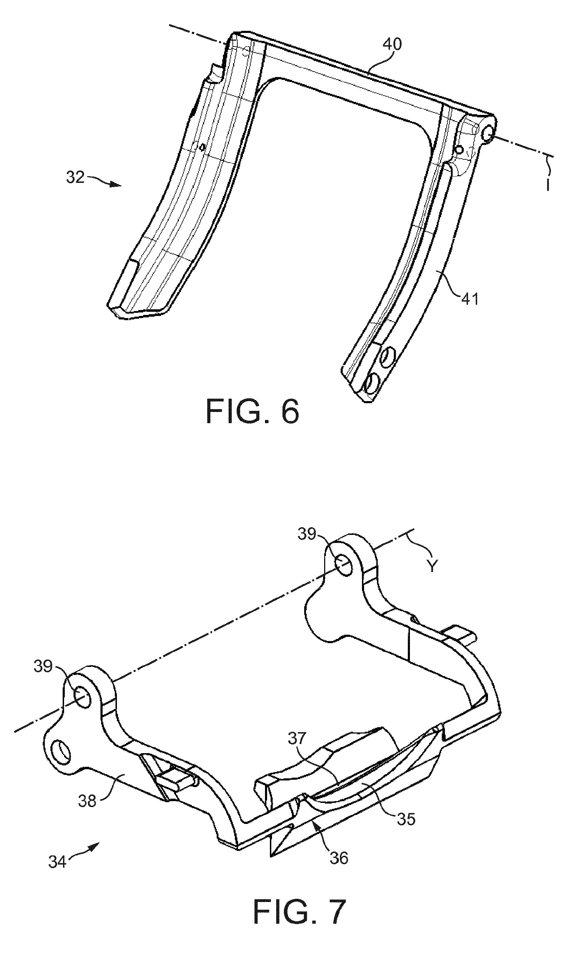

Figure 6 is a perspective view of the sliding ramp of the device;
Figure 7 is a perspective view of the capsule support member of the device;

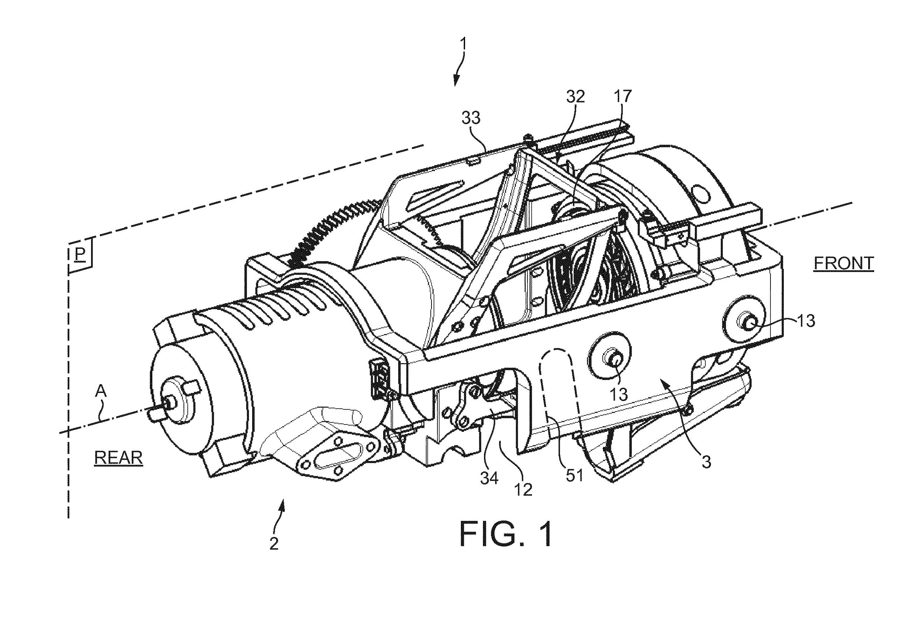

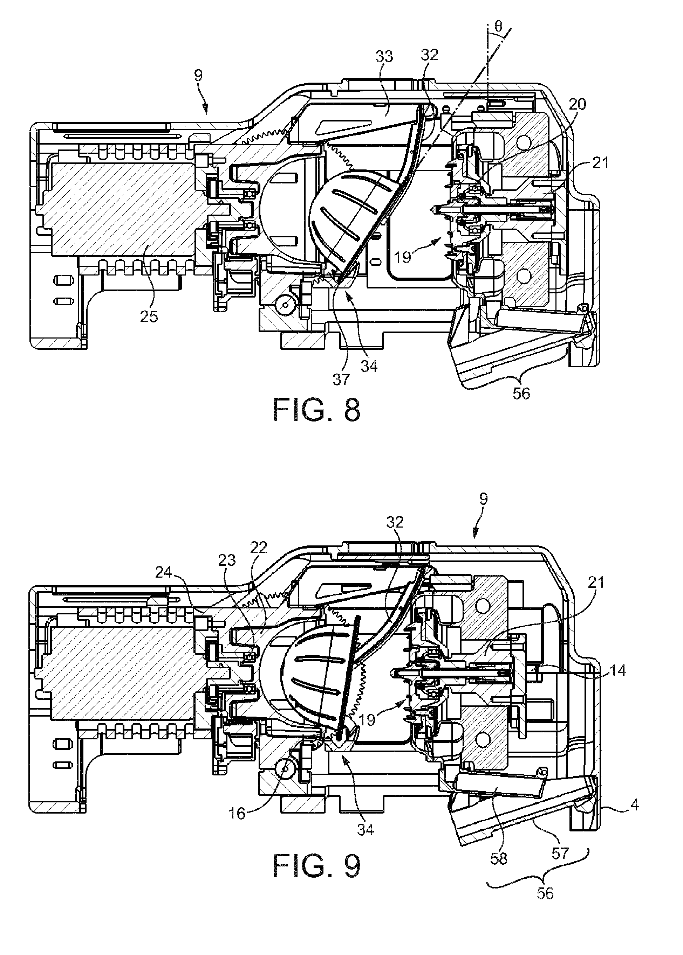

Figure 8 shows a cross-sectional view along the longitudinal median plane P of the device of figure 1 in the open position of the device with the capsule being held, in the passage, in intermediate position;
Figure 9 shows a cross-sectional view along plane P of the device of figure 1 during an initial step of the closure of the device; in particular, showing the sliding ramp pushing the capsule towards the cavity of the first enclosing member; the capsule also initially tilting or swiveling about the receiving surface of the capsule support, then being ramped up in the cavity;

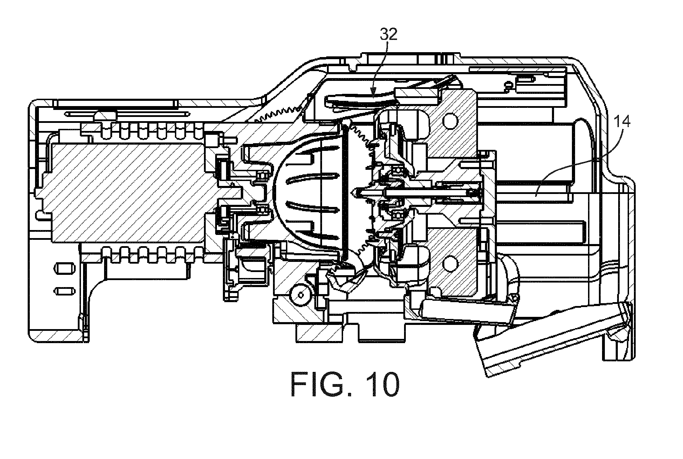

Figure 10 shows a cross-sectional view along plane P of the device, just before the device is closing; in particular when the capsule is inserted in the cavity of the first enclosing part and starts to be engaged by the second enclosing part;

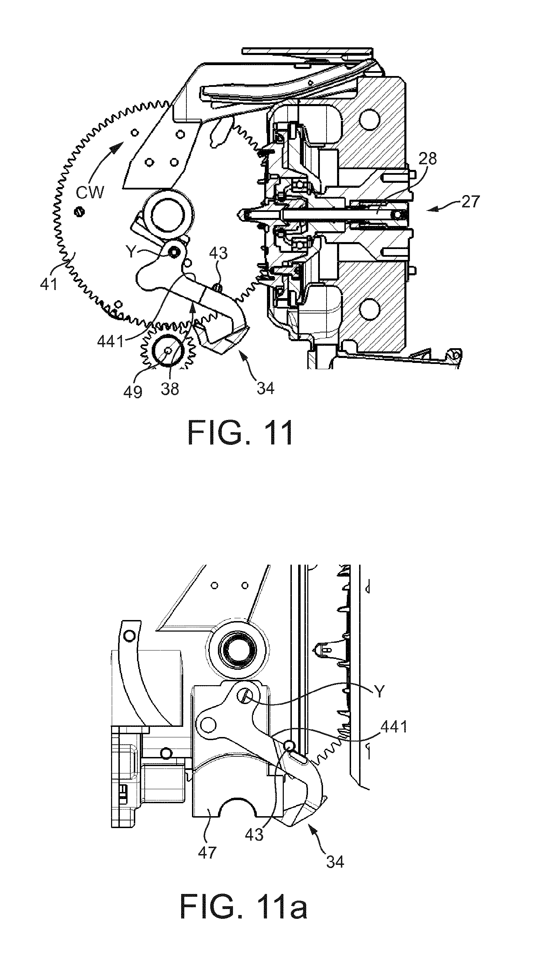

Figure 11 shows a partial section view of the device corresponding to the position of the parts of Figure 10;
Figure 11a shows a detail of figure 11;

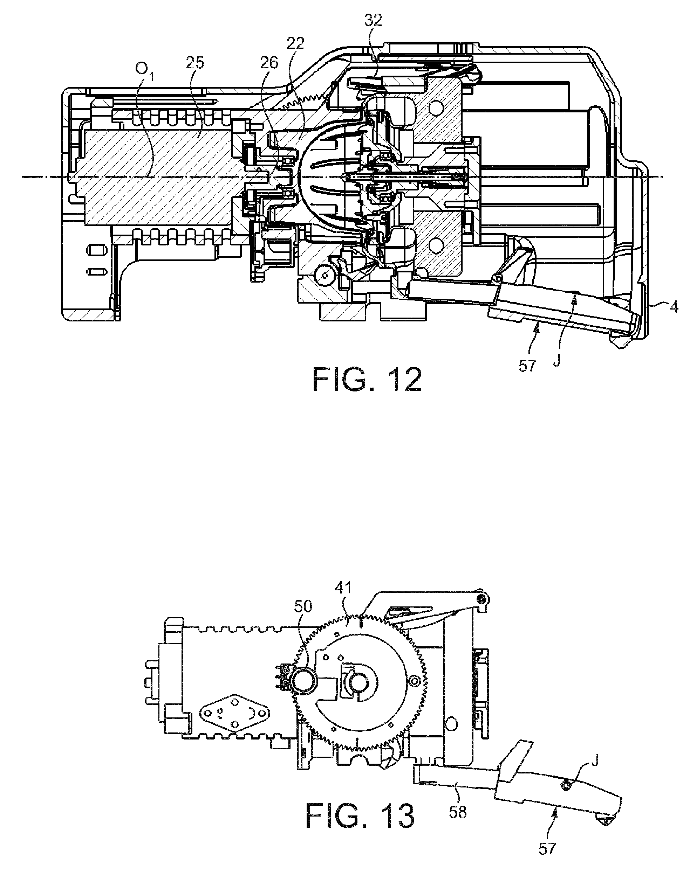

Figure 12 shows a cross-sectional view along plane P of the device in the closed position of the first and second enclosing parts around the capsule;
Figure 13 shows a partial side view of the device corresponding to the closed position of Figure 12, with the guiding frame of the second enclosing part removed;

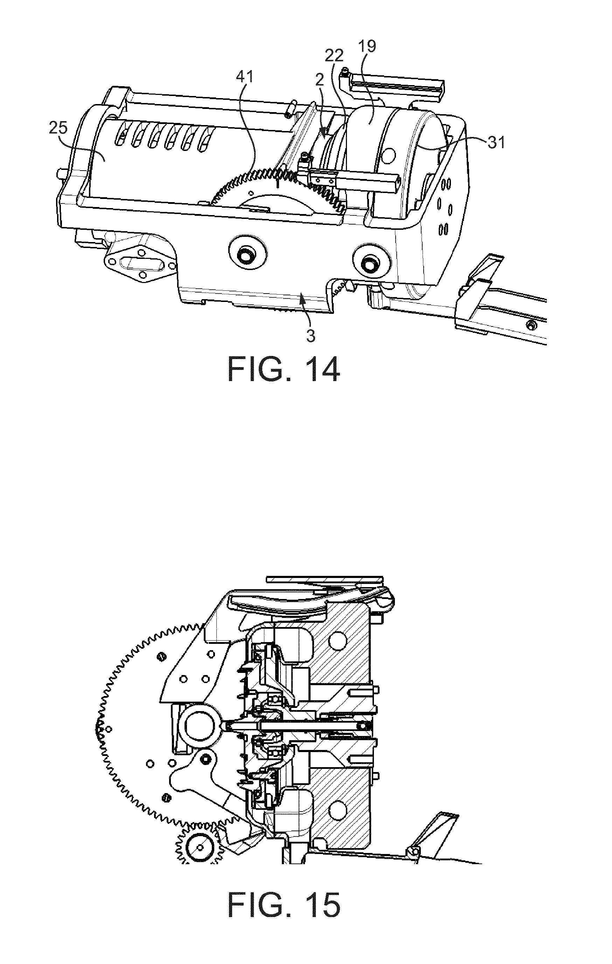

Figure 14 shows a perspective and partial view of the device, in the closed position, with the outer casing removed;
Figure 15 shows a partial section view of the device corresponding to the closed position of the parts of Figure 14;

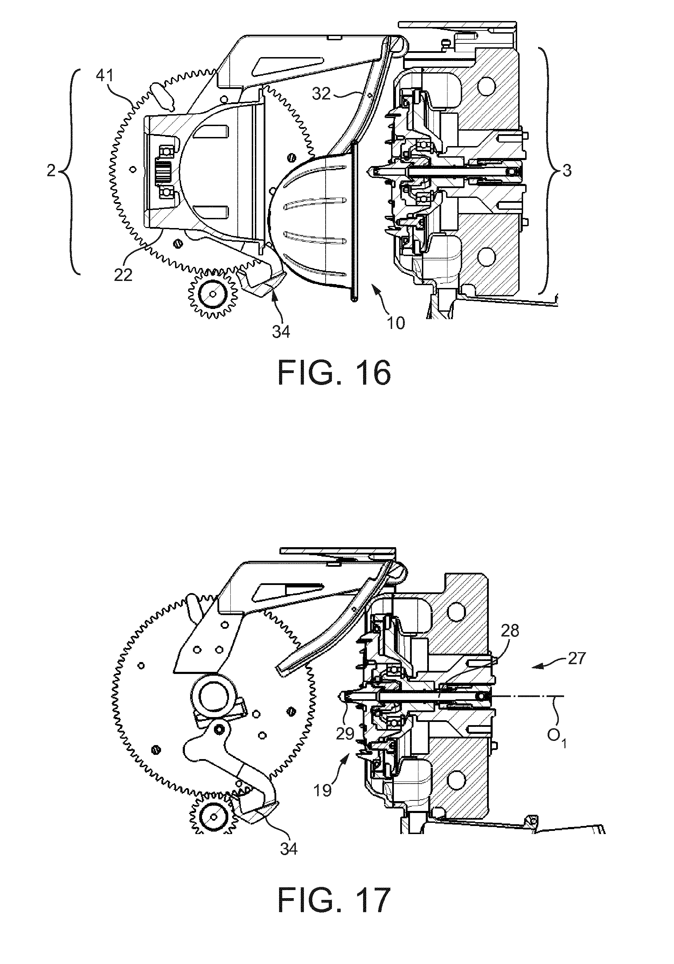

Figure 16 shows a partial view of the device corresponding to the initial step of reopening of the device for ejection of the capsule; the capsule support member being still in retracted position;
Figure 17 shows a partial view of the device corresponding to the initial step of reopening of the device of figure 13 (without the capsule);

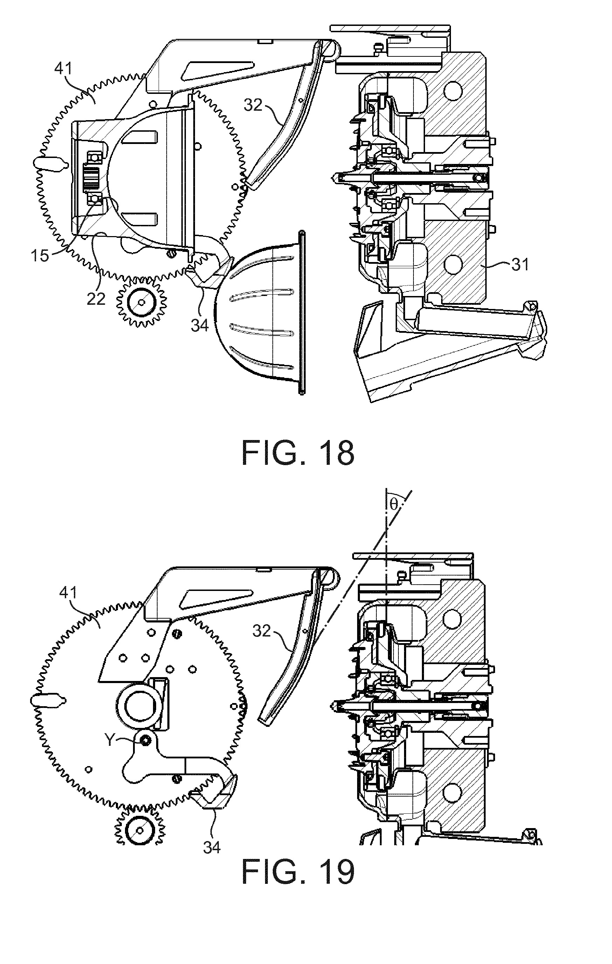

Figure 18 shows a partial section view of the device corresponding to the return to the open position of the device; the capsule support member being released by the magnetic clutch arrangement and being returned to the capsule support position;
Figure 19 shows a partial section view of the device corresponding to the position of the parts of Figure 18;

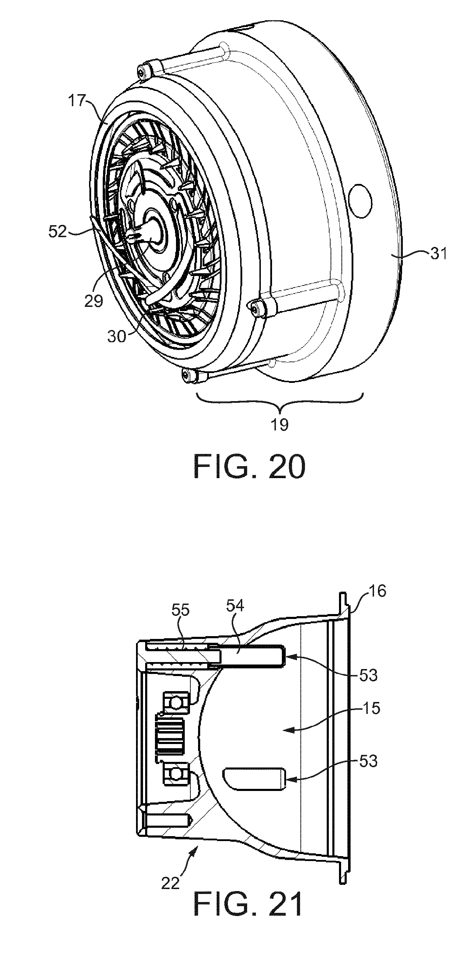

Figure 20 shows, in perspective view, the brewing interface member of the second enclosing part of the device;
Figure 21 shows, in cross section view, the capsule holder of the first enclosing member;

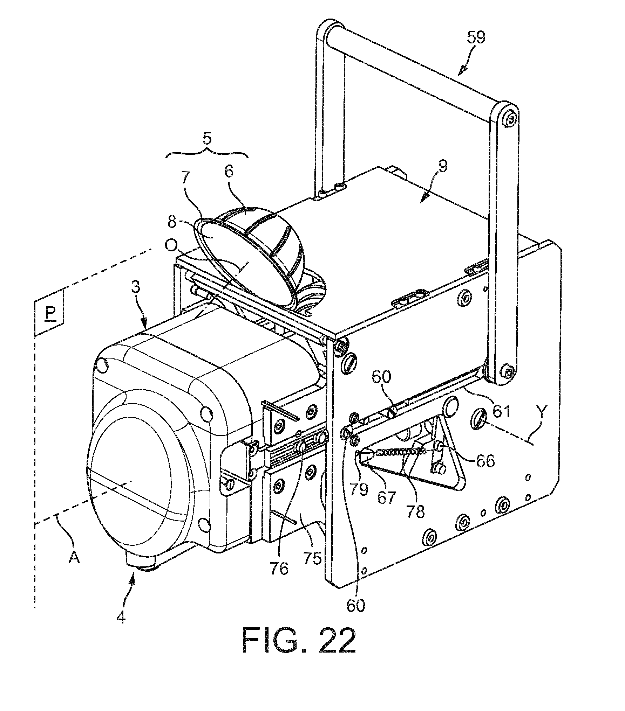

Figure 22 shows a perspective view of the beverage production device of the present invention according to a second mode;

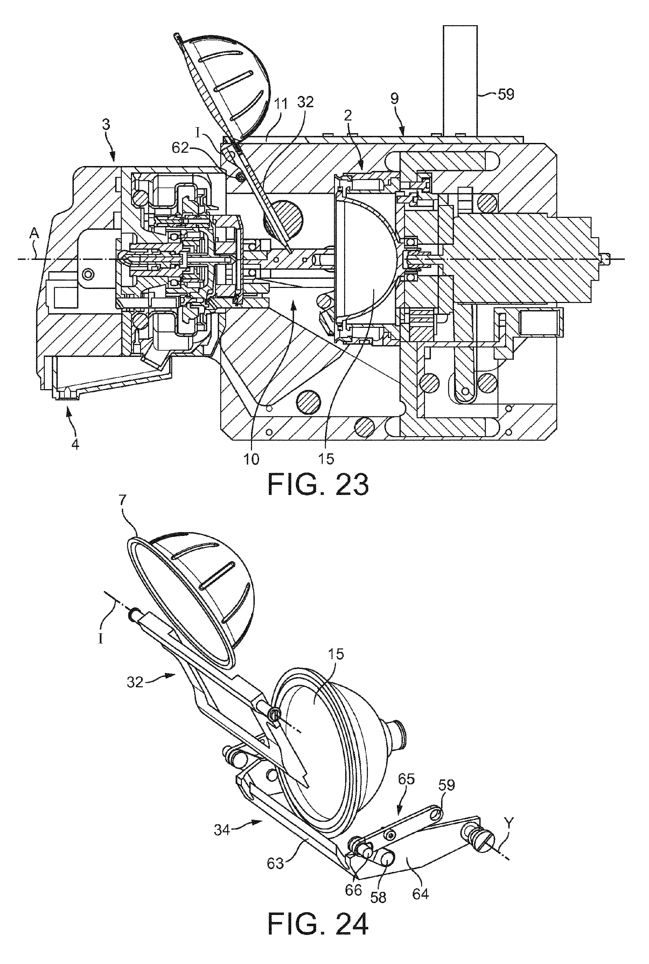

Figure 23 shows a cross-sectional view along the median longitudinal plane P of the device of figure 22, in the open position of the device for insertion of a capsule inside;
Figure 24 shows a perspective view of the capsule holding means of the device of figure 23;

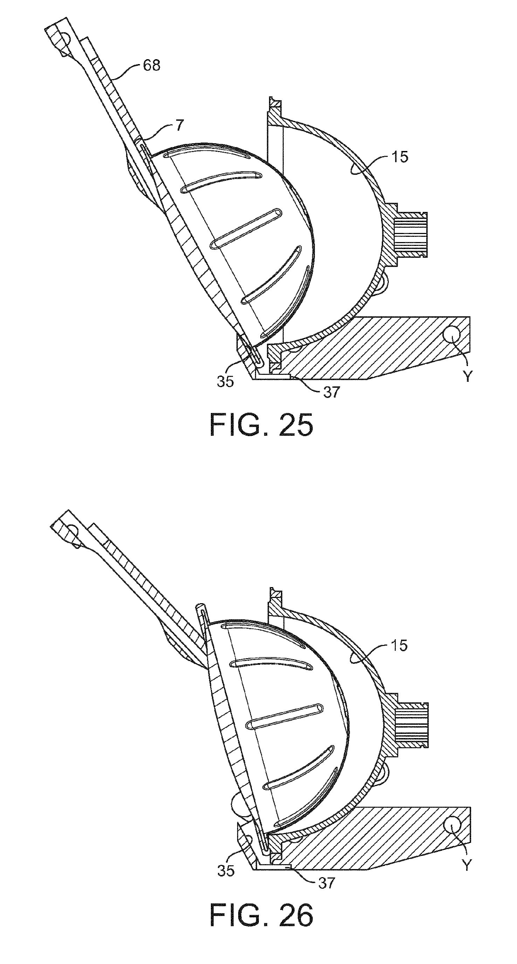

Figure 25 shows a cross section view of the capsule holding means of the device with the capsule resting in intermediate position;
Figure 26 shows a cross section view of the capsule holding means of the device with the sliding ramp pushing the capsule in the cavity of the first enclosing member;

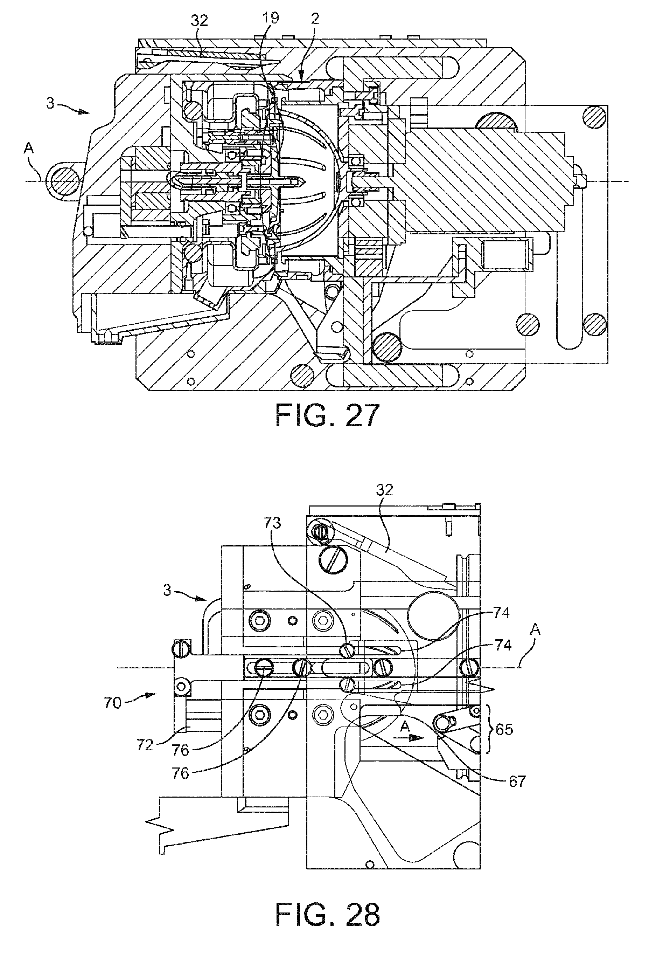

Figure 27 shows a cross-sectional view along plane P of the device of figure 22 in the closed position;
Figure 28 shows a side view of detail of the device for a first position of the capsule ejection means;

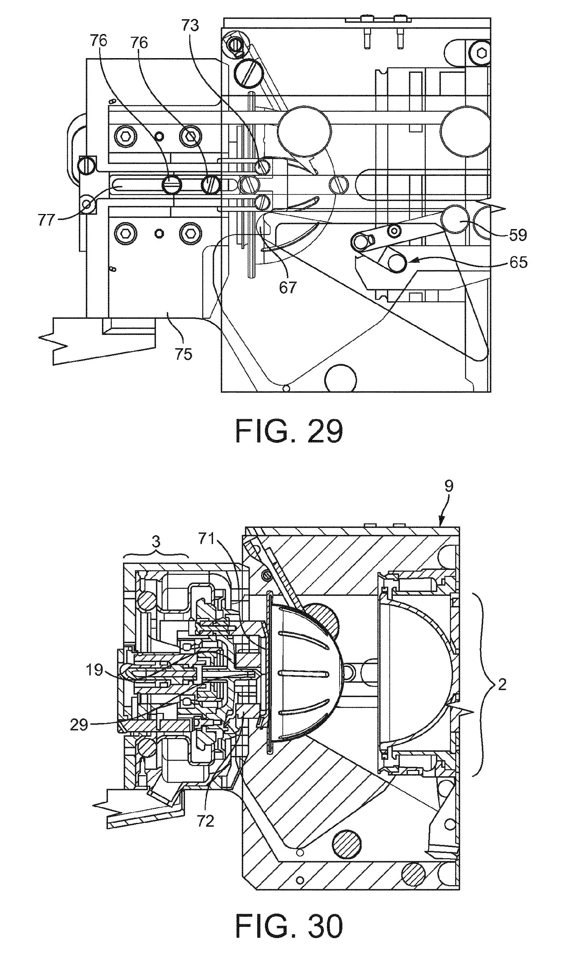

Figure 29 shows a side view of detail of the device for a second position of the capsule ejection means;
Figure 30 shows a cross section view of the device of figure 29 showing the fall of the capsule.

### Detailed description of preferred modes:

The present detailed description is given as a non-limiting (preferable) mode in which many variations and combinations are still possible. In particular, the use of terms such as "preferably", "optionally", "in general", "may", "for example", "non-limiting" (etc.) provide a suitable vocabulary intended to relate to the broad possible invention as well as allow the general invention to take the form of many possible options. In particular, essential or non-essential technical characteristics described in this section can be individually combined with more general characteristics present in the summary of the invention and claims, unless the combinations appear technically infeasible to the skilled artisan.

By reference to figures 1 and 2, the invention relates to a beverage production device 1, such as a brewing unit of a coffee machine, such device comprising a first enclosing part 2 and a second enclosing part 3.

The device is generally conceived to receive and enclose a capsule 5 for the preparation of a beverage by feeding water in the capsule, extracting the beverage out of the capsule and dispensing it through a beverage outlet 4 generally located in front of the device. The device is further conceived to eject the capsule using gravity; the capsule generally falling into a capsule collecting bin (not illustrated).

The capsule 5 has generally a cup-shaped body 6 with a rim or flange 7 extending outwardly and a lid 8 such as a sealing membrane and/or filter wall. The body is preferably substantially rotationally symmetrical about a central axis O. At its opening, the body is covered by the lid forming (and the rim too) a, preferably, circular contour. The body of the capsule can be made of any suitable rigid packaging material such aluminium, or polymer or a combination of aluminium and polymer (e.g., alu-PP). The lid may generally be more flexible for being perforated such as a thin sheet of aluminium or polymer or both or, be porous or apertured, such as a membrane of polymer with through-holes or paper or both. The body of the capsule may be more or less deep depending on the volume of beverage ingredient required for the preparation. The distance between the opening of the body (closed by the lid) and the farthest point of its bottom may be, for instance, of 3-5 cm or more. The capsule may bear at least one code such as a 1-D or 2-D barcode which is identified in the device by suitably positioned code identifying means (e.g., barcode reader). In a possible example, the code is positioned on the rim, either on the side directed towards the lid or the opposite side, i.e., the side directed towards the bottom of the capsule. The capsule generally contains a dose of beverage ingredient such as roast and ground coffee for preparing a coffee extract, tea for preparing a tea extract and the like.

In the illustrated example, the first enclosing part 2 is static relative to an outer casing 9 of the device. The second enclosing part is mobile relative to the first enclosing part and outer casing 9, from an open position in which a passage 10 is formed between the two parts and a closed position in which the passage 10 is eliminated and the capsule is enclosed and in engagement between the two enclosing parts for enabling the preparation of the beverage.

The passage 10 forms a through-opening positioned between the two parts 2, 3 when the two parts are spaced apart in the open position of the device. Above the passage, is preferably provided an insertion hole 11 of a sufficient size for insertion of the capsule by gravity. Below the passage is also preferably provided an ejection opening 12 of a sufficient size for ejection of the capsule from the passage.

The second enclosing part 3 is actually mobile or moveable, from the open position to the closed position and reciprocally, along a main longitudinal direction of open/closure movement A relative to the first enclosing part 2. For this, the second enclosing part 3 is guided in its movement in or along the casing 9. The casing may extend forwardly by the beverage outlet 4. However, this is not mandatory and the beverage outlet 4 can also be associated directly to the second enclosing part 3 and be mobile with it.

In the illustrated example, the second enclosing part 3 is guided via two (or more) guiding pins or rods 13 (figure 1) along two opposite guiding rails 14 (figure 9) provided on the inner sides of the casing 9.

It should be noted that the longitudinal direction of movement A is preferably horizontal or slightly horizontal and the passage 10 preferably extends vertically or slightly vertically. "Slightly" refers here to a variation relative to the strictly, respectively, horizontal or vertical directions of not more than about 15-20°.

The first part comprises a cavity 15 dimensioned for receiving the body or, at least part of the body, of the capsule 5. The first enclosing part further comprises a pressing edge 16 which generally applies closure forces on the rim 7 of the capsule in the closed position; such rim being squeezed between the pressing edge 16 and a complementary pressing portion 17 of the second enclosing part 3 in closed position (see figures 20-21).

In the present non-limiting embodiment, the device comprises a centrifugal brewing unit for preparing the beverage by application of centrifugal forces to the liquid fed in the capsule and collecting the beverage in a beverage collector 18 of the device.

The second enclosing part 3 preferably comprises a brewing interface member 19, for engaging the capsule, in particular its lid and/or rim, which is rotationally mounted, such as via (ball) bearing(s) 20, relative to a base member 21 of the second enclosing part. A collector 18 is preferably formed in the second enclosing part 3 to collect beverage leaving the capsule by effect of centrifugation from the brewing interface member.

The first enclosing part 2 also preferably comprises a capsule holder 22, which is rotationally mounted, such as via (ball) bearing(s) 23, on a base member 24 of the first enclosing part. The base member is further connected to the outer casing 9. The capsule holder 22 is further linked to a rotary motor 25 via a rotational axle 26.

In the closed position of the device illustrated in figure 12, the capsule holder of the first enclosing member and the capsule inserted in the cavity are driven in rotation (centrifugation) about a median longitudinal axis **01.** The brewing interface member 19 is thus also driven in rotation about the same axis **01.**

In the present case, as shown in figure 5, the second enclosing part 3 comprises liquid injection means 27 to supply liquid, generally hot water, within the capsule, during extraction in the closed position (figure 12). However, in other possible modes, the liquid injection means could as well be positioned at the first enclosing part 2 such as directly behind the cavity. The liquid injection means 27 comprises a conduit of liquid 28, preferably aligned with the longitudinal rotation axis 01, and an injection lance or needle 29. The lance or needle protrudes from the engaging surface of the brewing interface member 19 to enable to perforate or enter in the capsule. The lance or needle 29 further preferably comprises liquid inlet(s) for distributing liquid in the capsule in one or more directions (figure 20).

The brewing interface member 19 may also comprise a beverage heating means 31 to maintain the beverage at a suitable serving temperature in the collector. The beverage heating means can be formed integrally with the collector 18 or be a separate element connected to it.

It should be noted that, in general, the device is preferably intended to be arranged with a substantially horizontal or slightly inclined longitudinal direction of movement **A.** Also, the longitudinal rotation axis **01** is generally substantially aligned with the longitudinal direction of movement **A.** However, it is possible that compensation means of play are necessary to compensate for a possible misalignment of the enclosing parts.

The brewing interface member 19 may optionally also comprise beverage extraction means for assisting the beverage in draining from the capsule. For example, the beverage extraction means comprises a series of perforation members 30 for creating openings through the lid of the capsule. The perforation members can be small spikes, blades, needles and the like. It should be noted that, in possible reverse or simply different configurations, these extraction means can be positioned inside the cavity 15 or be distributed between the first and second enclosing members.

It should be noted that a configuration of the first enclosing part being mobile along the longitudinal direction of open/closure movement of the device (axis **A**) and the second enclosing part 3 being static relative to the casing 9 is also possible. It is also possible to have both first and second enclosing parts 2, 3 mobile relative the casing 9 in the longitudinal direction **A** from the open position to the closed position and reciprocally.

It should be noted that in other possible modes, the first and/or second enclosing part(s) 2,3 can be moved along the longitudinal direction **A,** for only a final or small portion of the closing path of the device. Therefore, the movement of first and/or second enclosing part(s) can encompass movements having directions which are inclined or parallel to axis **A** during the closure of the device, such as during the initial portion of the closing path.

According to a general aspect of the invention, the device is provided with a sliding ramp 32 for guiding the capsule when inserted through the insertion opening in the passage. The sliding ramp is arranged to receive the capsule from an insertion position in the device (figure 2) to an intermediate position of the capsule in the passage 10 (figure 8). For this, the sliding ramp 32 is thereby positioned in a preset guiding position in the open position of the enclosing parts, as this is shown in figures 2 and 3.

In general, the sliding ramp 32 is preferably inclined in the direction of (or towards) the cavity 15 of the first enclosing part, when the sliding ramp is in the preset guiding position. Considering that the direction of movement **A** is horizontal or slightly horizontal, the sliding ramp has a capsule receiving surface which is inclined relative to the vertical at an angle e less than 90 degrees. The angle e is preferably of about 10 to 60 degrees, more preferably about 20 to 45 degrees, relative to vertical (figure 8). Thus, during its insertion fall, the capsule is approached to the first enclosing part 2, as it is guided along the sliding ramp 32.

When in the intermediate position, the capsule is oriented such that the plane passing by its rim or flange is inclined relative to the vertical. The lower rim portion of the capsule is also closer to the cavity than its upper rim portion. A benefit is to provide a sufficiently large room for accommodating capsules of different depths while pre-positioning the capsule close to the cavity in the intermediate position, thereby facilitating and making smoother the next operation of insertion of the capsule inside the cavity.

In general, the sliding ramp does not need to be perfectly rectilinear but may be slightly bent, such as in the direction of the cavity. A bent configuration can be beneficial to assist the operation of moving the capsule in the cavity as will be explained later.

The sliding ramp 32 is arranged to be moveable in direction of the cavity 15 as a result of the movement of the second enclosing part 3 in the direction of movement A toward the first enclosing part. Preferably, the sliding ramp is pivotally mounted about an axis **I** relative to the casing 9, or on any portion directly or indirectly connected to the casing, such two lateral arms 33.

The pivot axis **I** of the sliding ramp is preferably transversal or orthogonal to the direction **A** of movement of the second enclosing part. As a result, when the second enclosing part 3 is moved to the closed position of the device, it engages the sliding ramp 32 towards the 15 cavity of the first enclosing part (figure 9). The sliding ramp finally moves away from the passage 10 as it pivots about axis **I** and comes in a retracted position corresponding to the closed position of the device as shown in figure 12.

Generally, the movement of the sliding ramp is free in rotation or swiveling between the preset guiding position and the retracted position. In the preset guiding position, the sliding ramp 32 is stopped by a suitable abutment for receiving the capsule in the intermediate position in a stable manner.

Generally, it should be noted that the sliding ramp can be mounted by a swiveling means or articulation that is not strictly a single pivot. It can be, for instance, a translational and swiveling articulation such as, for instance, obtained by a guiding oblong opening or by a linkage comprising two or more pivots axis.

Importantly, the device further comprises a dedicated holding means for holding the capsule against gravity in intermediate position. Such dedicated holding means, positioned preferably close to the cavity but being independent from it, ensures a precise and constant positioning of the capsule in intermediate position. It may also prevent the capsule from being shocked against the edge of the cavity which would otherwise possibly deform its sidewall and/or rim and could so affect its integrity.

In particular, the holding means comprises a capsule support member 34. The support member 34 is arranged to form a receiving surface 35 for the capsule. In particular, the receiving surface 35 is preferably concave for receiving and/or holding the rim of the capsule in the intermediate position (figure 7). For example, the capsule receiving surface is part of a transversal gutter 36. The gutter is oriented upwardly such as with at least one portion of receiving surface substantially aligned with the general direction of extension of the sliding ramp (when it is inclined in the preset guiding position).

An advantage of the holding configuration of the invention is that the rim of the capsule is always maintained in a constant referential at the intermediate position irrespective of the variation of depth of the capsule. This constant referential ensures a reliable insertion of the capsule and closure of the device. It also ensures that the capsule is not damaged.

According to a general aspect of the invention, the receiving surface 35 is preferably positioned at distance from the cavity 15. Preferably, the distance comprises at least a longitudinal distance component by reference to the longitudinal direction of movement **A.** However, the distance can additionally comprise a vertical distance component by reference to the vertical direction. Thereby, the lowest point of the capsule in the intermediate position, i.e., the lower edge of the rim, is positioned below the lowest point of the cavity, i.e., the lower edge of the cavity. As shown in figure 8, the distance should be such that the capsule does not rest or, alternatively at least not exclusively rest, on the edge of the cavity in the intermediate position.

The receiving surface 35 is also arranged to form a pivot point or line 37 for the capsule to tilt, at least initially, from its inclined intermediate position as a result of the movement of the sliding ramp (figures 7 and 8). The pivot point or line is so positioned at the lowest point of the rim when the capsule is in its intermediate (inclined) position. It should also be noted that, as the device is closing, the capsule is forced to enter the cavity 15 by the sliding ramp 32, as illustrated in figure 9. Depending on the geometry of the capsule, in particular, its body, and the geometry of the cavity, the capsule can be lifted progressively from the support member 34 in such a manner that the capsule no longer contacts the receiving surface. Generally, the edge of the cavity serves as a ramp for the body of the capsule to complete the insertion of the capsule therein.

The capsule support member 34 is preferably mounted to the bottom of the first enclosing part 2 in such a manner that it is moveable between a capsule support position (figure 8) and a retracted position (figure 16) in which it is placed away from the passage 10, for enabling the closure of the enclosing parts 2, 3. The capsule support member 34 is generally mounted to the first part about an axis Y which is substantially orthogonal to the main direction **A** of movement of the second part relative to the first part.

Figure 7 illustrates an example of the capsule support member 34. The capsule support can have a U-shaped general form with a transversal gutter 36 and two side levers 38 which are pivotally mounted to the first enclosing part by pivot axles 39. The pivot axles 39 are arranged to enable the capsule support to pivot about axis **Y,** which is substantially orthogonal to the main direction **A** of movement of the second enclosing part relative to the first enclosing part.

Figure 6 illustrates a non limiting example of the sliding ramp 32. The ramp can comprises a transversal arm 40 fixedly connected to two side arms 41. Each side arm 41 may have an "L"-shaped section oriented inwardly to guide and hold the capsule rim on each side. A two side-arm configuration enables to position the capsule in the intermediate position without risk of capsule being misaligned during the closure. In particular, as the device is closing, the capsule can be perforated by the lance or needle perfectly in the center of the lid. If the capsule would be slightly biased, this could potentially cause an off-centered perforation and so potential issues during the beverage centrifugal brewing process. The configuration of the sliding ramp thereby reduces such risk. The two arms also extends with a central space and a free ends towards the cavity in order to allow some room for the lid 8 of the capsule which is not necessary flat but may be slightly convex or bulged (e.g., such as if the lid is a flexible membrane that deforms due to an internal pressure of gas inside the capsule).

A description will now be given as a preferred (non-limiting) option for driving the second enclosing part 3 between the open position and the closed position and the capsule support member 34 between the capsule support position and the retracted position. The motions of the second enclosing part 3 and of the capsule support member 34 are produced in coordination by a common driving means.

Concerning the capsule support member 34, a first cam means is provided between the capsule support member and a cam driving means. The first cam means is engaged for moving the capsule support member to the support position illustrated in figures 5, 5a. For this, the first cam means is associated to a rotary cam driving means 41. The first cam means comprises, for example, a pin 42 protruding from the rotary cam driving means 41 and which engages a first side 440 of the lever 38. When the rotary cam driving means 41 is rotated in a first direction **CC,** i.e., counterclockwise, it engages the first side 440 of the lever 38 to move and hold the capsule support member 34 in the capsule support position.

A second cam means is provided for moving the capsule support to the retracted position of figures 11, 11a. The second cam means comprises a second pin 43 protruding from the rotary cam driving means 41 which engages a second (opposite) side 441 of the lever 38. Therefore, when the rotary cam driving means 41 is rotated in a second direction **CW,** i.e., clockwise, it engages the second side of the lever to move and place the capsule support member 34 in the retracted position. The first and second pins 42, 43 are positioned angularly distant on the rotary cam driving means 32 so that the lever 38 is actuated in coordination with the displacement of the cam driving means.

Additionally, the capsule holding means comprises a clutch arrangement for maintaining the capsule support member 34 in the retracted position while being disengaged by the first cam means until the second cam means engages the capsule support. This arrangement ensures that the capsule can be ejected from the cavity and passage 10 before the capsule support member is back to the capsule support position. This situation is illustrated in figures 16 and 17.

The clutch arrangement is preferably a magnetic clutch. However, it could also be a mechanical clutch. The magnetic clutch comprises a first magnet 45 positioned on the bottom 47 of the first enclosing part and a second magnet 46 positioned on the lever 38 (figure 5a). The magnet arrangement is such that it is magnetically disengaged when the capsule support member 34 is in the capsule support position (figure 5a). In such position, the magnets 45, 46 are angularly distant one another. The magnet arrangement is arranged to become in magnetic engagement when the capsule support member 34 is in the retracted position (figures 11a, 12, 16). In this configuration, the two magnets are angularly aligned and the support member becomes captured by the first enclosing part. For the magnetic engagement to be broken and the support member to be returned to the capsule holding position, the driving means 41 must engage the support member by the pins 42 against the lever. This operation is obtained as the second enclosing part 3 becomes sufficiently distant from the first enclosing part 2.

In the preferred mode, the rotary cam driving means 41 is at least one rotary driving (geared) wheel mounted in rotation about an axis **O** on the first enclosing part. Most preferably, (since the system is symmetrically conceived about the median plane **P**) it is a pair of geared wheels engaging, via pair of pins 42, 43, the pair of side levers 38 of the capsule support member. It is clear that equivalent means are possible such as for replacing the geared wheel by another equivalent mechanical driving system (e.g., levers).

The at least one gear wheel can be directly or indirectly connected to any suitable power transmission means such as a motor arrangement or a manual lever. In the mode illustrated, the gear wheel 41 is geared by a transmission gear 48 comprising an axle 49 which is linked to a motor (not illustrated). The motor is controlled to change the rotational direction of the wheel and gear.

The cam driving means 41 also forms the driving means for driving the second part 3 in reciprocal movement along the axis **A** according to the different open/closed positions. As a result, the movement of the second part 3 and the movement of the capsule support 25 are perfectly coordinated. The number of pieces can also be reduced accordingly. For this, the rotary driving wheel 41 may, for instance, comprise a fixed guiding member 50, such as a rod, positioned at its periphery. The guiding member is engaged in a guiding cam 51, such as a slot, provided in the second enclosing part. Preferably, the guiding member is arranged to move an angular path of 180 degrees between the open and closed positions of the device and reciprocally. For example, the guiding cam 51 (slot) is arranged vertically and the guiding member 50 is arranged to move from a first horizontal position corresponding to the open position (figure 3) to a second horizontal position corresponding to the closed position (figure 13).

As illustrated in figure 20, when the device is re-opened from the closed position of figures 12-14, it may be necessary to unstick the capsule from the engaging surface of the second enclosing part 3, in particular, from its piercing means. For that elastic pushing means, as illustrated in figure 20, preferably one or more spring-blades 52, can be provided, such as on the surface of the brewing interface member, which act against the capsule to exert axial forces in the direction of the first enclosing part.

As illustrated in figure 21, in order to facilitate the removal of the capsule from the cavity 15 of the first enclosing part 2, the first enclosing part may comprise capsule ejecting means 53. The ejecting means are preferably configured to engage with the body of the capsule. It should be noted that the ejecting means could also be configured to engage the rim of the capsule. In the illustrated mode of figure 21, the ejecting means comprises at least one pusher 54 slidably mounted in a housing of the capsule holder 22, against an elastic biasing means 55 such as a coil spring. Of course, many equivalent variations to the present form can be envisaged.

In addition, the device of the invention can comprise a beverage drip collecting assembly 56. This assembly may comprise a drip collector 57 pivotally mounted on the outer casing about an axis **J** to allow it to rock from a beverage delivery position (figure 12) to a drip collecting position (figure 2). The drip collector 57 is positioned in liquid communication between the collector or a collector outlet 58 and the beverage outlet 4. The drip collector may take the shape of a gutter open at both ends and any other suitable configuration. The drip collector and collector or collector outlet 58 are free to slide or move one another between the two positions. The residual liquid dripping from the assembly is generally collected in a drip tray or any suitable reservoir of the device (not illustrated).

The invention is illustrated in the next figures 22-30 according to a second mode.

In this second mode of the invention, the relative movement of the enclosing parts 2, 3 is driven by a manual lever or handles 59. For sake of simplicity, the same numeral references have been used for designated the same or equivalent features or elements of the invention. It should also be noticed that certain changes presented in this mode can easily be transferred to the first mode and reciprocally.

The device thereby comprises a first enclosing part 2 and a second enclosing part 3 moving relative to the first enclosing part. The beverage outlet 4 is here connected directly to the first enclosing part 2 such that it is moved co-jointly with the first enclosing part 2 during opening and closure of the device. The first enclosing part 2 is mounted in a fixed manner along a main direction or axis A on an outer casing 9. The second enclosing part is mounted on the casing in a longitudinally mobile fashion along axis **A** between an open position of the device (figures 22, 23) for insertion of the capsule in the passage and a closed position of the device (figures 27). In particular, the second enclosing part comprises a pair of side guiding pins 60 guided along a pair of side guiding rails 61 of the inverted U-shaped casing (e.g., one rail is provided on each side of the frame).

Figures 23 to 25 illustrate the way the capsule is inserted and held in intermediate position in the device. The device comprises a sliding ramp 32 which is pivotally mounted on the frame 10 just below the insertion opening 11. The sliding ramp 32 can be moved between the preset guiding position corresponding to the open position of the enclosing parts (figure 23) and a retracted position corresponding to the closed position of the enclosing parts (figure 27). In the preset guiding position, the sliding ramp is substantially inclined relative to the vertical and is directed towards the first enclosing part 3. The sliding ramp is freely mounted around axis **I**. It is stopped in the preset guiding position by at least one abutment member 62 that may be fixed to the inner surface of the casing. Therefore, the displacement of the sliding ramp from the preset guiding position, when resting on abutment member 62, towards the retracted position is obtained by the pushing action of the second enclosing member 3 moving along the main longitudinal direction **A,** in the direction of closure.

For example, the sliding ramp 32 can be a quadrilateral or U-shaped member forming a substantially flat sliding surface for guiding the lid and/or rim of the capsule. The device further comprises a capsule support member 34. The capsule support member comprises a transversal arm 63 and two side arms 64 positioned on each side of the enclosing part. The side arms 64 are pivotally mounted to the casing along a transversal axis Y (figure 24) and to the first enclosing part by a linkage 65 (e.g., comprising two bars attached by a moved pivot 66) attached to the support along pivot axis 58 and to the enclosing part along pivot axis 59 so that the support member can be moved between a capsule support position (figure 23) and a retracted position when the linkage 65 is fully extended (figure 27). The capsule support member is moved to the support position by a cam means 67 belonging to the second enclosing part 3 as illustrated in figure 28. For holding the capsule in the intermediate position, the capsule support member 34 comprises a receiving surface 35 which is inclined towards the cavity (as in the previous mode). Preferably, the surface 35 is placed substantially in alignment with the sliding surface 68 of the sliding ramp. This receiving surface 35 is sufficiently distant from the cavity of the enclosing part 2 both in horizontal and vertical directions. As a result, when the capsule is pushed by the sliding ramp 32 in the cavity 15, the capsule tilts around a pivot point or line 37 at the lowest part the rim as shown in figures 25-26.

In another aspect, a capsule ejecting means 70 is provided in the second enclosing part 3. In particular, the capsule ejecting means comprises a pushing plate 71 mounted in sliding relationship through the second enclosing part 3. For example, the plate is attached to sliding rods 72 traversing and guided through the enclosing part. The pushing plate 71 moves from a retracted position in which the plate is placed flush with (or inserted in) the brewing interface member 19 of the part (figure 27) and a pushing position in which the plate is distant from the brewing interface 19 (figures 29-30). When the second enclosing part 3 is moved towards the open position, the capsule leaves the cavity 15 as it is initially captured by the brewing interface member, in particular, by the piercing members and/or injection needle 29 which create sufficient friction forces with the capsule it engages into. The capsule ejecting means (in particular, pushing plate 71) is moved together with the second enclosing part until abutment means 73 comes in abutment with an abutment portion 74 of the casing. When abutment means are engaged by the casing, the pushing plate 71 is stopped in ejection position while the second enclosing part 3 continues its (frontward) movement along axis **A** until the fully open position is reached (figure 29). As a non-limiting example, the second enclosing part 3 is moved in a telescopic manner beyond the frame by two side wings 75 to allow further extension of the enclosing part which translates by pins 76 along guiding rails 77 in the wings.

As illustrated in figure 30, the capsule ejecting means is dimensioned to ensure an extension of the pushing plate in the passage until the full disengagement of the piercing means and/or central injection lance or needle. As it is shown in figure 30, the injection needle 29 is here fully disengaged from the lid, causing the contact only between the capsule lid and the pushing plate. As a result, the capsule being no longer maintained in horizontal direction, it can fall by gravity through the ejection opening 23.

For the return of the capsule support member 34 to the capsule support position, an elastic member is provided such as at least helical spring 78 which forces the linkage 65 into a folded configuration (as shown in figures 22 and 24). The spring can be connected to the linkage at the moved pivot 66 on one end and to the casing at a connection point 79. When the two enclosing parts are moved away from one another to open the passage, the spring gradually forces the support into the capsule support position. The passage can be sized so that the capsule is able to fall down into a capsule bin below the passage.

## Claims

1. Beverage production device (1) for receiving a capsule (5) for the preparation of a beverage comprising :
a first enclosing part (2) comprising a cavity (15),
a second enclosing part (3);
the first and second enclosing parts (2, 3) being moveable relative to one another between an open position in which a passage (10) is left for insertion of the capsule and a closed position in which the capsule is enclosed between the first and second enclosing parts (2, 3) and the capsule is at least partially received in the cavity (15) for the preparation of the beverage;
a sliding ramp (32) being positioned in a preset guiding position in the open position of the enclosing parts (2, 3) for guiding the capsule during insertion in the passage to an intermediate position in the passage (10); wherein the sliding ramp (32) is inclined relative to the vertical in the preset guiding position and towards the cavity (13); and,
capsule holding means to support the capsule in the intermediate position against gravity;
**characterized in that**
the holding means comprises a capsule support member (34) which comprises a receiving surface (35, 69), for preventing the capsule in intermediate position from falling under gravity, which is positioned at distance from the cavity (15) of the first enclosing part (2).

2. Beverage production device according to claim 1, wherein the sliding ramp (32) is mounted relative to the first enclosing part (2) or an outer casing (9) to move the capsule towards the cavity (15) as a result of the second enclosing part (3) moving relative to the first enclosing part (2).

3. Beverage production device according to claims 1 or 2, wherein the receiving surface (35, 69) of the capsule support member (34) is arranged to form a pivot point or line (37) at least when the capsule starts moving towards the cavity (15),

4. Beverage production device according to any of claims 1 to 3, wherein the sliding ramp (32) is mounted, preferably pivotally, relative to the first enclosing part (2) or an outer casing (9) to be moved away from the passage (10) in a retracted position as a result of the second enclosing part (3) moving relative to the first enclosing part (2) in closed position.

5. Beverage production device according to claim 4, wherein the sliding ramp (32) is pushed by the second enclosing part (3) from its the preset guiding position to its retracted position.

6. Beverage production device according to any one of the preceding claim, the capsule receiving surface (35) is arranged substantially with at least one portion aligned with the guiding surface of the sliding ramp (32).

7. Beverage production device according to any one of the preceding claim, wherein the capsule support member (34) is mounted on the bottom of the first enclosing part (2) in moveable manner between a capsule support position corresponding to the intermediate position of the capsule (figure 8) and a retracted position (figure 16) in which the capsule in the passage (10) can fall by gravity for its ejection from the passage.

8. Beverage production device according to claim 7, wherein a first cam means (42, 440; 67) is provided to move the capsule support member (34) from the retracted position to the capsule support position.

9. Beverage production device according to claim 8, wherein a, preferably magnetic, clutch arrangement is provided to maintain the capsule support member (34) in the retracted position while being disengaged by the first cam means.

10. Beverage production device according to claims 8 or 9, wherein the first cam means (42, 440) is provided between the capsule support member and a rotary cam driving means (41); the first cam means been engaged to move the capsule support member (34) to the capsule support position when the cam drive means (41) is rotated to a first direction (CC).

11. Beverage production device according to claim 10, wherein a second cam means (43, 441) is provided between the capsule support member and the rotary cam driving means (41); the second cam means been arranged relative to the first cam means to become engaged when the cam driving means (41) is rotated in opposed direction (CW) relative to first direction (CC).

12. Beverage production device according to claims 10 to 12, wherein the rotary cam driving means (41) further comprises means for driving the second enclosing part (3) between the open and closed positions, by a reciprocal rotational movement of the rotary driving means (41).

13. Beverage production device according to any one of the preceding claims, wherein the second enclosing part (3) comprises a brewing interface member (19) with elastic pushing means, preferably at least one spring-blade (52), which act on the capsule, preferably its lid, to unstick it from the said member (19).

14. Beverage production device according to any one of the preceding claims, wherein the first enclosing part (2) comprises capsule ejecting means (53) which engage the capsule, preferably its body (6), to facilitate its removal from the cavity (15).

15. Beverage production device according to any one of the preceding claims, wherein the first enclosing part (2) and second enclosing part (3) form together at least part of a centrifugal brewing unit in which the capsule is driven in rotation for exerting forces of centrifugation inside the capsule resulting in beverage extraction from the capsule.
